# EUROPÄISCHE PATENTSCHRIFT

(11) **EP 1 227 873 B1**
(45) Veröffentlichungstag und Bekanntmachung des Hinweises auf die Patenterteilung: **05.10.2005**
(21) Anmeldenummer: 00979483.5
(22) Anmeldetag: 04.10.2000
(51) Int. Cl.: B01D 53/14, C10L 3/10, B01D 11/04

(54) **ENTFERNEN VON COS AUS EINEM KOHLENWASSERSTOFF-FLUIDSTROM UNTER VERWENDUNG EINER WASCHFLÜSSIGKEIT**
REMOVAL OF COS FROM A STREAM OF HYDROCARBON FLUID USING A WASH LIQUID
ELIMINATION DU COS D'UN FLUX FLUIDE D'HYDROCARBURE EN UTILISANT UN LIQUIDE DE LAVAGE

(30) Priorität: 05.10.1999 DE 19947845
(43) Veröffentlichungstag der Anmeldung: 07.08.2002
(73) Patentinhaber: BASF Aktiengesellschaft, 67056 Ludwigshafen (DE)
(72) Erfinder: WAGNER, Rupert, 67551 Worms (DE); HUGO, Randolf, 67246 Dirmstein (DE); HOLST, Thomas, S., Calgary, Alberta T3C 1J3 (CA)
(74) Vertreter: Kinzebach, Werner
(86) Internationale Anmeldenummer: PCT/EP2000/009704
(87) Internationale Veröffentlichungsnummer: WO 2001/024912

(56) Entgegenhaltungen:
- WO-A-00/66249
- US-A- 4 336 233
- US-A- 4 999 031
- US-A- 5 348 714

## Beschreibung

Die vorliegende Erfindung betrifft das Entfernen von COS aus einem COS-haltigen Kohlenwasserstoff-Fluidstrom, insbesondere aus einem Gasstrom, wie beispielsweise Erdgas, Synthesegas aus Schweröl oder schweren Rückständen oder Raffineriegas, oder aus flüssigen oder verflüssigten Kohlenwasserstoffen, wie beispielsweise LPG (Liquefied Petroleum Gas) oder NGL (Natural Gas Liquids), sowie eine Waschflüssigkeit zur Verwendung in derartigen Verfahren.

In zahlreichen Prozessen in der chemischen Industrie treten Fluidströme auf, die Sauergase, wie z.B. CO₂, H₂S, SO₂, CS₂, HCN, COS oder Mercaptane als Verunreinigungen enthalten.

Bei den hier in Rede stehenden Flüssigkeits- oder Gasströmen kann es sich beispielsweise um Kohlenwasserstoffgase aus einer Erdgasquelle, Synthesegase aus chemischen Prozessen oder etwa um Reaktionsgase bei der partiellen Oxidation von organischen Materialien, wie beispielsweise Kohle oder Erdöl handeln. Die Entfernung von Schwefelverbindungen aus diesen Fluidströmen ist aus unterschiedlichen Gründen von besonderer Bedeutung. Beispielsweise muß der Gehalt an Schwefelverbindungen von Erdgas durch geeignete Aufbereitungsmaßnahmen unmittelbar an der Erdgasquelle reduziert werden, denn üblicherweise enthält das Erdgas neben den oben aufgeführten Schwefelverbindungen auch einen gewissen Anteil an mitgeführtem Wasser. In wässriger Lösung liegen diese Schwefelverbindungen aber als Säuren vor und wirken daher korrosiv. Für den Transport des Erdgases in einer Pipeline müssen daher vorgegebene Grenzwerte der schwefelhaltigen Verunreinigungen eingehalten werden. Darüber hinaus sind zahlreiche Schwefelverbindungen bereits in niedrigen Konzentrationen übelriechend und, allen voran Schwefelwasserstoff (H₂S), extrem toxisch.

Auch der CO₂-Gehalt von Kohlenwasserstoffgasen, wie Erdgas, muß üblicherweise deutlich reduziert werden, da hohe Konzentrationen von CO₂ den Brennwert des Gases verringern und gegebenenfalls Korrosion an Leitungen und Armaturen hervorrufen können.

Es wurden daher bereits zahlreiche Verfahren zum Entfernen von Sauergasbestandteilen aus Fluidströmen wie Kohlenwasserstoffgasen, LPG oder NGL entwickelt. Bei den am weitesten verbreiteten Verfahren wird das Sauergase enthaltende Fluidgemisch mit einem organischen Lösungsmittel oder einer wässrigen Lösung eines organischen Lösungsmittels in einer sogenannten Gaswäsche oder einer Flüssig/Flüssig-Extraktion in Kontakt gebracht.

Es existiert eine umfangreiche Patentliteratur zu Gaswaschverfahren und entsprechenden in diesen Verfahren eingesetzten Waschlösungen. Grundsätzlich kann man dabei zwei unterschiedlichen Typen von Lösungsmitteln für die Gaswäsche unterscheiden:

Zum einen werden sog. physikalische Lösungsmittel eingesetzt, die auf einem physikalischen Absorptionsvorgang beruhen, d.h. die Sauergase lösen sich in dem physikalischen Lösungsmittel. Typische physikalische Lösungsmittel sind Cyclotetramethylensulfon (Sulfolan) und dessen Derivate, aliphatische Säureamide, NMP (N-Methylpyrrolidon) N-alkylierte Pyrrolidone und entsprechende Piperidone, Methanol und Gemische aus Dialkylethern von Polyethylenglykolen (Selexol®, Union Carbide, Danbury, Conn., USA).

Zum anderen werden chemische Lösungsmittel eingesetzt, deren Wirkungsweise auf dem Ablauf von chemischen Reaktionen beruht, bei denen die Sauergase in einfacher entfernbare Verbindungen umgewandelt werden. Beispielsweise werden bei den im industriellen Maßstab am häufigsten als chemische Lösungsmittel eingesetzten wässrigen Lösungen aus Alkanolaminen beim Durchleiten von Sauergasen Salze gebildet, die entweder durch Erhitzen zersetzt und/oder mittels Dampf abgestrippt werden können. Die Alkanolaminlösung wird durch das Erhitzen oder Strippen regeneriert, so daß sie wiederverwendet werden kann. Bevorzugte, beim Entfernen von Sauergasverunreinigungen aus Kohlenwasserstoffgasströme verwendete Alkanolamine umfassen Monoethanolamin (MEA), Diethanolamin (DEA), Triethanolamin (TEA), Diisopropylamin (DIPA), Aminoethoxyethanol (AEE) und Methyldiethanolamin (MDEA).

Primäre und sekundäre Alkanolamine sind insbesondere für Gaswäschen geeignet, bei denen das gereinigte Gas einen sehr niedrigen CO₂-Gehalt aufweisen muß (z.B. 10 ppmᵥ CO₂). Für das Entfernen von H₂S aus Gasgemischen mit einem hohen ursprünglichen CO₂-Gehalt macht sich jedoch nachteilig bemerkbar, daß die Wirksamkeit der Lösung zum Entfernen von H₂S durch eine beschleunigte Absorption von CO₂ stark verringert wird. Außerdem werden bei der Regeneration von Lösungen der primären und sekundären Alkanolamine große Mengen and Dampf benötigt.

Aus der europäischen Patentanmeldung EP-A 0 322 924 ist beispielsweise bekannt, daß tertiäre Alkanolamine, insbesondere MDEA, besonders geeignet sind für eine selektive Entfernung von H₂S aus Gasgemischen, die H₂S und CO₂ enthalten.

In der deutschen Patentanmeldung DE-A-1 542 415 wurde vorgeschlagen, die Wirksamkeit sowohl von physikalischen Lösungsmitteln wie auch von chemischen Lösungsmitteln durch Zugabe von Monoalkylalkanolaminen oder von Morpholin und dessen Derivaten zu erhöhen. In der deutschen Patentanmeldung DE-A-1 904 428 wird die Zugabe von Monomethylethanolamin (MMEA) als Beschleuniger zur Verbesserung der Absorptionseigenschaften einer MDEA-Lösung beschrieben.

In dem US-Patent US 4,336,233 wird eine der derzeit wirksamsten Waschflüssigkeiten zum Entfernen von CO₂ und H₂S aus einem Gasstrom beschrieben. Es handelt sich dabei um eine wässrige Lösung von Methyldiethanolamin (MDEA) und Piperazin als Absorptionsbeschleuniger oder Aktivator (aMDEA®, BASF AG, Ludwigshafen). Die dort beschriebene waschflüssigkeit enthält 1,5 bis 4,5 mol/l Methyldiethanolamin (MDEA) und 0,05 bis 0,8 mol/l, bevorzugt bis zu 0,4 mol/l Piperazin. Das Entfernen von CO₂ und H₂S unter Verwendung von MDEA wird ferner in den folgenden Patenten der Anmelderin detaillierter beschrieben: US 4,551,158; US 4,553,984; US 4,537,753; US 4,999,031; CA 1 291 321 und CA 1 295 810. In US 4,336,233 wird auch beschrieben, daß mit einer wässrigen Lösung aus Methyldiethanolamin und Piperazin nur eine teilweise Entfernung von COS aus einem Gasstrom möglich ist. Ferner wird ausgeführt, daß für eine weitgehend vollständige Entfernung von COS dieses vor Durchführung der sog. Aminwäsche in an sich bekannter Weise in einfacher entfernbare Verbindungen wie CO₂ und H₂S umgewandelt werden muß, beispielsweise durch Hydrolyse oder durch Hydrierung, etwa in Anwesenheit von Wasserstoff über Kobalt-Molybdän-Aluminium-Katalysatoren.

COS ist eine Verbindung, die im wesentlichen in Gasen aus partiellen Oxidationen sowie in Erdgas auftritt. In Erdgas resultiert das COS aus der Kondensationsreaktion von CO₂ und H₂S.

Während die Entfernung von CO₂ und H₂S aus Kohlenwasserstoffströmen heute technisch relativ wenig Probleme bereitet, liegt die Hauptgefahr für eine Überschreitung der Spezifikationen für den maximalen Schwefelgehalt in einer unzureichenden Entfernung des COS. COS kann beispielsweise durch den sog. Copper-Strip-Test zur Schwefelbestimmung nachgewiesen werden. Dabei hydrolysiert das COS zurück zu CO₂ und H₂S und kann damit als H₂S detektiert werden. Bei der Herstellung von Flüssiggasen (liquefied gases), wie LPG oder NLG, kann es zu einer Anreicherung von COS kommen, wenn das Flüssiggas durch Fraktionieren, beispielsweise im Fall von NLG aus Erdgas, separat gewonnen wird. COS reichert sich dann entsprechend seiner Flüchtigkeit in der Propan-Fraktion an, was eine spezielle Propanbehandlung erforderlich macht.

Beim Einsatz von Absorbern wird COS weit schwächer als H₂S absorbiert, so daß der Durchbruch von COS weit vor dem Durchbruch des H₂S erfolgt. Da die üblichen verwendeten Absorber zudem in gewissem Umfang die Kondensation von H₂S und CO₂ zu COS katalysieren, besteht auch bei zunächst weitgehend COS-freiem Gas die Gefahr, daß der Schwefel des H₂S als COS das Adsorptionsbett passiert. Im Falle von Synthesegasen wird das verbleibende COS am sog. Shift-Kontakt zu H₂S umgesetzt und muß in einem weiteren Reinigungsschritt als solches entfernt werden.

Zum Entfernen von COS aus schwefelhaltigen Fluidströmen werden in der Literatur unterschiedliche Lösungsansätze vorgeschlagen:

Rib et al. beschreiben in *"Performance of a Coal Gas Cleanup Process Evaluation Facility", presented at AlChE Spring National Meeting, 9. Juni 1982,* eine zweistufige heiße Alkalicarbonat-Wäsche, die auf eine selektive Entfernung von Schwefelkomponenten ausgelegt war. Bei diesem Prozeß konnten maximal 40% des im Erdgas enthaltenen COS entfernt werden.

Ferrell et al. beschreiben in *"Performance and Modelling of a Hot Potassium Carbonate Acid Gas Removal System in Treating Coal Gas", EPA Report No. EPA*/*600*/*7 87*/*023, November 1987,* Kaliumcarbonat-Wäschen zum Entfernen von Sauergasen aus Gasströmen. Die COS-Absorptionsrate lag bei hohen CO₂-Absorptionsraten immer deutlich unter den Werten für CO₂.

Um COS weitgehend vollständig aus einem Kohlenwasserstoffgasstrom oder aus einem LPG-Strom zu entfernen, können physikalische Lösungsmittel eingesetzt werden (vergl. *"Gas Conditioning and Processing", Vol. 4, Maddox, Morgan*). Derartige Verfahren sind jedoch wegen der hohen Co-Absorptionsraten von längerkettigen Kohlenwasserstoffen in den physikalischen Lösungsmitteln nachteilig, da Wertprodukt entweder verloren geht oder aufwendig zurückgewonnen werden muß.

In US 4,808,765 wird ein mehrstufiges Verfahren zur Behandlung von schwefelhaltigen flüssigen oder gasförmigen Kohlenwasserstoffströmen beschrieben, bei dem der Fluidstrom zunächst mit einem Gemisch aus Methyldiethanolamin (MDEA) als selektivem H₂S-Absorptionsmittel und Diisopropanolamin (DIPA) in Kontakt gebracht wird, welches 50 bis 80% des COS zu H₂S und CO₂ hydrolysiert. Ein Teil des im Fluidstrom verbleibenden COS wird dann in einer Alkaliaminwäsche in Na₂S bzw. Na₂CO₃ umgewandelt. Schließlich werden in einer wässrigen Alkalilösung das restliche COS und gegebenenfalls im Fluidstrom vorhandene Mercaptane entfernt. Ein derartiger Prozeß, bei dem drei verschiedene Waschlösungen verwendet und jeweils, soweit möglich, separat regeneriert werden, ist apparativ sehr aufwendig und dementsprechend kostenintensiv. Zudem reagiert DIPA, wie auch andere in der Literatur zur Behandlung von LPG vorgeschlagene Amine, wie z.B. AEE oder MEA, irreversibel mit COS, was zu hohen Lösungsmittelverlusten führt.Eine Zurückgewinnung von MEA erfordert beispielsweise einen thermischen Reclaimer.

Der vorliegenden Erfindung liegt daher das technische Problem zugrunde, ein apparativ möglichst einfaches Verfahren zum Entfernen von Sauergasbestandteilen aus Kohlenwasserstoff-Fluidströmen anzugeben, welches neben CO₂ und H₂S insbesondere COS weitgehend entfernt, so daß vorgegebene Schwefelspezifikationen vorhersagbar und zuverlässig eingehalten werden können.

Gelöst wird diese Aufgabe durch die Verwendung gemäß vorliegendem Anspruch 1. Hierbei bringt man den Fluidstrom in einer Absorptions- bzw. Extraktionszone mit einer Waschflüssigkeit in innigen Kontakt. COS kann mit der erfindungsgemäß vorgeschlagenen Aminwäsche im wesentlichen vollständig aus dem Fluidstrom entfernt werden. Anschließend trennt man den von COS weitgehend gereinigten Fluidstrom und die mit COS beladene Waschflüssigkeit voneinander und führt beide aus der Absorptions- bzw. Extraktionszone ab. Die Waschflüssigkeit kann anschließend in an sich bekannter Weise regeneriert und der Absorptions- bzw. Extraktionszone erneut zugeführt werden.

Wässrige Alkanolamin-Lösungen, die weniger als 0,4 mol/l eines primären oder sekundären Amins als Aktivator enthalten, werden üblicherweise zum Entfernen von H₂S und CO₂ verwendet, wie beispielsweise aus der oben erwähnten US 4,336,233 bekannt ist. Allerdings ging man bislang davon aus, daß eine vollständige COS-Entfernung mit diesen Lösungen nicht möglich ist und daher zusätzliche Prozeßschritte vorgesehen werden müssen, wenn auch COS weitgehend, d.h. mehr als 95% des ursprünglichen COS-Gehalts, entfernt werden soll.

Überraschenderweise ist es nun möglich, durch Verwendung einer höheren Konzentration des als Aktivator dienenden primären oder sekundären Amins das COS im wesentlichen vollständig aus dem Kohlenwasserstoff-Fluidstrom zu entfernen. Während bei den bislang verwendeten Aktivatorkonzentrationen COS erst dann in nennenswertem Umfang aus dem Fluidstrom entfernt wird, wenn CO₂ bereits praktisch zu 100% entfernt wird, ermöglicht die Verwendung einer wässrigen Aminlösung mit 0,8 bis 1,7 mol/l eines primären oder sekundären Amins als Aktivator eine weitgehend unspezifische Entfernung von CO₂ und COS. Bei vorgegebenen Prozeßparametern wird also der gleiche prozentuale Anteil von CO₂ und von COS entfernt.

Das Entfernen von CO₂ und H₂S aus einem Kohlenwasserstoff-Fluidstrom ist dem Fachmann aber geläufig. Es existieren bereits kommerzielle Software-Lösungen, die ausgehend von vorgegebenen Anlageparametern und gewünschten Spezifikationen des gereinigten Gases oder LPG's, die Betriebsparameter für eine bestimmte Waschflüssigkeit berechnen können (beispielhaft sei hier das Programm TSWEET von Brian Research & Engineering genannt). Mit dem erfin-dungsgemäßen Verfahren kann beispielsweise eine Aminwäsche so ausgelegt werden, daß 99% des im Fluidstrom enthaltenen CO₂ entfernt werden. Es wird erfindungsgemäß gewährleistet, daß unter diesen Bedingungen auch 99% des im Fluidstrom enthaltenen COS entfernt werden.

Die Waschflüssigkeit enthält 0,8 bis 1,7 mol/l und besonders bevorzugt zwischen 0,8 und 1,2 mol/l des Aktivators. Bei diesen bevorzugten hohen Aktivatorkonzentrationen ist mit dem erfindungsgemäßen Verfahren sogar eine selektive Entfernung von COS gegenüber CO₂ möglich, d.h. es wird ein prozentual höherer Anteil COS als CO₂ aus dem Kohlenwasserstoff-Fluidstrom entfernt. Für eine praktisch vollständige Entfernung von COS ist es also nicht erforderlich, mit einem wenig ökonomischen Überschuß an Waschflüssigkeit zu arbeiten. Erfindungsgemäß konnte bei höheren Aktivatorkonzentrationen bei zu geringem Lösungsmitteleinsatz sogar ein Durchbruch des CO₂ vor einer Verletzung der COS-Spezifikation beobachtet werden.

Erfindungsgemäß ist es also möglich, COS weitgehend vollständig aus dem Kohlenwasserstoff-Fluidstrom zu entfernen. Je nach Aktivatorkonzentration kann sogar erreicht werden, daß dabei ein in manchen Anwendungsfällen sogar erwünschter Restgehalt an CO₂ im Gasstrom verbleibt.

Erfindungsgemäß beträgt der Gesamtamingehalt der Waschflüssigkeit vorteilhaft 20 bis 70 Gew.%, und besonders bevorzugt 40 bis 50 Gew.%.

Es wird ein aliphatisches tertiäres Alkanolamin, beispielsweise Triethanolamin (TEA) oder Methyldiethanolamin (MDEA), verwendet. Die Verwendung von MDEA ist insbesondere für Aminwäschen von Kohlenwasserstoffgasen, wie Erdgas, bevorzugt, während die Verwendung von TEA bei der LPG-Wäsche vorteilhaft sein kann. So wird beispielsweise in US 5,877,386 beschrieben, daß TEA-haltige Aminlösungen eine geringere Löslichkeit in LPG besitzen, was die Aminverluste im Waschprozess verringert.

Vorteilhaft wird als Aktivator ein primäres oder sekundäres Alkanolamin oder ein gesättigter 5- oder 6-gliedriger N-Heterozyklus verwendet, der gegebenenfalls weitere Heteroatome, ausgewählt unter O und N, enthält. Vorteilhaft ist der Aktivator ausgewählt aus der Gruppe bestehend aus Monoethanolamin (MEA), Monomethylethanolamin (MMEA), Diethanolamin (DEA), Piperazin, Methylpiperazin oder Morpholin. Als besonders bevorzugter Aktivator wird in dem erfindungsgemäßen Verfahren Piperazin verwendet.

Die vorliegende Erfindung betrifft auch eine waschflüssigkeit zum Entfernen von COS aus COS-haltigen Kohlenwasserstoff-Fluidströmen, bestehend aus einer wässrigen Aminlösung, die 1,5 bis 5 mol/l eines aliphatischen tertiären Alkanolamins und 0,8 bis 1,7 mol/l, vorzugsweise zwischen 0,8 und 1,2 mol/l eines als Aktivator dienenden, gesättigten 5- oder 6-gliedrigen N-Heterocyclus umfaßt, der gegebenenfalls weitere Heteroatome, ausgewählt unter O und N, enthält, wobei das Alkanolamin vorteilhaft ein tertiäres Alkanolamin, vorzugsweise Methyldiethanolamin (MDEA) oder Triethanolamin (TEA), und der Aktivator bevorzugt Piperazin oder Methylpiperazin ist.

Durch Verwendung eines an sich bekannten selektiven H₂S-Absorptionsmittels wie MDEA erlaubt die erfindungsgemäße waschlösung außerdem eine weitgehende Entfernung von H₂S aus dem Gasstrom.

Sollte der Gas- oder LPG-Strom außerdem noch Mercaptane enthalten, so kann dem erfindungsgemäßen Verfahren eine weitere Prozeßstufe anschließen, bei der selektiv Mercaptane aus dem Gasstrom entfernt werden. Dazu kann beispielsweise, wie etwa in dem US-Patent US 4,808,765 beschrieben, eine wässrigen Alkalilösung (NaOH) verwendet werden. Mercaptane lassen sich auch, wie in dem US-Patent 4,462,968 beschrieben, mit Hilfe einer Waschlösung entfernen, die aus Wasserstoffperoxid oder einer Kombination von Wasserstoffperoxid mit Ammoniak oder mit einem Amin besteht.

Die Behandlung mit der Waschflüssigkeit kann mit den üblichen, in der Gaswäsche oder der LPG-Wäsche eingesetzten Waschvorrichtungen durchgeführt werden. Geeignete Waschvorrichtungen, die einen innigen Kontakt zwischen dem Fluidstrom und der Waschflüssigkeit gewährleisten, sind beispielsweise Füllkörper-, Packungs- und Bodenkolonnen, Radialstromwäscher, Strahlwäscher, Venturiwäscher und Rotations-Sprühwäscher, bevorzugt Packungs-, Füllkörper- und Bodenkolonnen.

In der Absorptionskolonne besitzt die Waschflüssigkeit typischerweise eine Temperatur von 40 bis 70 °C am Kolonnenkopf und von 50 bis 100 °C am Kolonnensumpf. Der Gesamtdruck in der Kolonne liegt im allgemeinen zwischen 1 und 120 bar, bevorzugt zwischen 10 und 100 bar.

Die Behandlung mit des Waschflüssigkeit kann in einem Schritt oder in mehreren aufeinanderfolgenden Teilschritten durchgeführt werden. Im letzteren Fall wird der die sauren Gasbestandteile enthaltende Fluidstrom in jedem Teilschritt mit jeweils einem Teilstrom der Waschflüssigkeit in innigen Kontakt gebracht. Beispielsweise kann an unterschiedlichen Stellen der Absorptionszone ein Teilstrom des Absorptionsmittels zugeführt werden, wobei - etwa bei Verwendung einer Absorptionskolonne - die Temperatur der zugeführten Waschflüssigkeit in aufeinanderfolgenden Teilschritten in der Regel vom Sumpf zum Kopf der Kolonne abnimmt.

Die mit sauren Gasbestandteilen beladene Waschflüssigkeit kann regeneriert und anschließend mit verringerter Beladung in die Absorptionszone zurückgeführt werden. Typischerweise wird bei der Regeneration eine Druckentspannung der beladenen waschflüssigkeit von einem in der Absorptionszone herrschenden höheren Druck auf einen niedrigeren Druck durchgeführt. Die Druckentspannung kann beispielsweise mittels eines Drosselventils geschehen. Ergänzend oder alternativ kann die Waschflüssigkeit über eine Entspannungsturbine geleitet werden, mit der ein Generator angetrieben und elektrische Energie gewonnen werden kann. Die so der Waschflüssigkeit bei der Entspannung entzogene Energie läßt sich beispielsweise auch zum Antrieb von Flüssigkeitspumpen im Kreislauf der Waschflüssigkeit verwenden.

Die Freisetzung der sauren Gasbestandteile kann beim Regenerieren der Waschflüssigkeit beispielsweise in einer Entspannungskolonne, beispielsweise einem senkrecht oder waagrecht eingebauten Flashbehälter oder einer Gegenstromkolonne mit Einbauten erfolgen. Es können mehrere Entspannungskolonnen hintereinander geschaltet werden, in denen bei unterschiedlichen Drücken regeneriert wird. Beispielsweise kann die waschflüssigkeit zunächst in einer Vorentspannungskolonne bei hohem Druck, der beispielsweise ca. 1,5 bar über dem Partialdruck der sauren Gasbestandteile in der Absorptionszone liegt, und anschließend in einer Hauptentspannungskolonne bei niedrigem Druck, beispielsweise bei 1 bis 2 bar absolut, regeneriert werden. Bei einem mehrstufigen Entspannungsprozeß werden in der ersten Entspannungskolonne vorzugsweise Inertgase, wie absorbierte Kohlenwasserstoffe, und in den nachfolgenden Entspannungskolonnen die saure Gasbestandteile freigesetzt.

Mit Hilfe einer vorzugsweise ebenfalls vorgesehenen Strippung können bei der Regeneration weitere Sauergase aus der Waschflüssigkeit entfernt werden. Dazu werden die waschflüssigkeit und ein Strippungsmittel, vorteilhaft ein heißes Gas, wobei wasserdampf bevorzugt ist, im Gegenstrom durch eine mit Füllkörpern, Packungen oder Böden versehene Desorptionskolonne geleitet. Bevorzugt beträgt der Druck bei der Strippung 1 bis 3 bar absolut und die Temperatur 90 bis 130 °C.

Eine Regeneration der Waschflüssigkeit in mehreren aufeinanderfolgenden Teilschritten, wobei die Beladung der Waschflüssigkeit mit Sauergasbestandteilen mit jedem Teilschritt abnimmt, wird beispielsweise in US 4,336,233 beschrieben. Danach wird eine Grobwäsche mit reinem Entspannungskreislauf ohne Strippung durchgeführt, wobei die beladene Waschflüssigkeit über eine Entspannungsturbine entspannt und schrittweise in einer Vorentspannungskolonne und einer Hauptentspannungskolonne regeneriert wird. Diese Variante kommt vor allem dann zum Einsatz, wenn die auszuwaschenden sauren Gase hohe Partialdrücke aufweisen und wenn an die Reinheit des Reingases nur geringe Anforderungen gestellt werden.

In einer weiteren bevorzugten Ausführungsform sind die in aufeinanderfolgenden Teilschritten des wasch- bzw. Absorptionsvorgangs eingesetzten Teilströme der Waschflüssigkeit durch aufeinanderfolgende Teilschritte des Regenerationsvorgangs erhältlich und weisen ein abnehmende Beladung mit sauren Gasbestandteilen auf. Dabei ist insbesondere ein Verfahren bevorzugt bei dem das die sauren Bestandteile enthaltende Feedgas oder -LPG nacheinander mit einem ersten Teilstrom der Waschflüssigkeit, der nach teilweiser Regenerierung in einer Entspannungskolonne und vor der Strippung, und einem zweiten Teilstrom der Waschflüssigkeit, der nach der Strippung erhalten wird, in innigen Kontakt gebracht wird.

Beispielsweise kann, wie in US 4,336,233 beschrieben, der Absorptionsschritt in zwei Teilschritten, einer Grob- und einer Feinwäsche, und der Regenerierungsschritt schrittweise durch Druckentspannung in einer Entspannungsturbine, einer Vorentspannungskolonne und einer Hauptentspannungskolonne, sowie durch anschließende Strippung durchgeführt werden. In diesem Fall kann der Teilstrom der Waschflüssigkeit für die Grobwäsche von der Hauptentspannungskolonne und der Teilstrom für die Feinwäsche von der Strippung stammen.

Das regenerierte Absorptionsmittel wird üblicherweise vor Einspeisung in die Absorptionszone über einen Wärmetauscher geleitet und auf die für den Waschvorgang erforderliche Temperatur gebracht. Beispielsweise kann der die Strippkolonne verlassenden regenerierten Waschflüssigkeit Wärme entzogen und der noch Sauergasbestandteile enthaltenden Waschflüssigkeit vor deren Eintritt in die Strippkolonne zugeführt werden.

Die Behandlung mit des Waschflüssigkeit kann mit typischen zur Gaswäsche und anschließender Regeneration der Waschflüssigkeit verwendeten Anlagenkonfigurationen durchgeführt werden, wie sie beispielsweise in US 4,336,233 für einen einstufigen bzw. zweistufigen Waschprozeß und besonders ausführlich in EP-A 0 322 924 für einen einstufigen Waschprozeß mit Entspannungs- und Strippungsschritt beschrieben sind. Auf beide Dokumente wird hiermit ausdrücklich Bezug genommen.

Die Erfindung wird im folgenden unter Bezugnahme auf die beigefügten Zeichnungen näher erläutert.

In den Zeichnungen zeigt
- Figur 1: ein Anwendungsbeispiel des erfindungsgemäßen Verfahrens in einem einstufigen Waschprozeß, dem sich eine Regeneration der Waschflüssigkeit mit Entspannungs- und Strippkolonnen anschließt;
- Figur 2: ein Diagramm, das für eine herkömmliche Waschflüssigkeit, bestehend aus einer wässrigen Lösung von 3,46 mol/l MDEA, die COS-Absorptionsrate in Abhängigkeit von der CO₂-Absorptionsrate darstellt;
- Figur 3: ein der Fig.2 entsprechendes Diagramm für eine herkömmliche waschflüssigkeit, die 3,39 mol/l MDEA und 0,10 mol/l Piperazin enthält;
- Figur 4: ein der Fig.2 entsprechendes Diagramm für eine herkömmliche waschflüssigkeit, die 3,20 mol/l MDEA und 0,36 mol/l Piperazin enthält;
- Figur 5: ein der Fig.2 entsprechendes Diagramm für eine erfindungsgemäße waschflüssigkeit, die 2,77 mol/l MDEA und 0,96 mol/l Piperazin enthält.

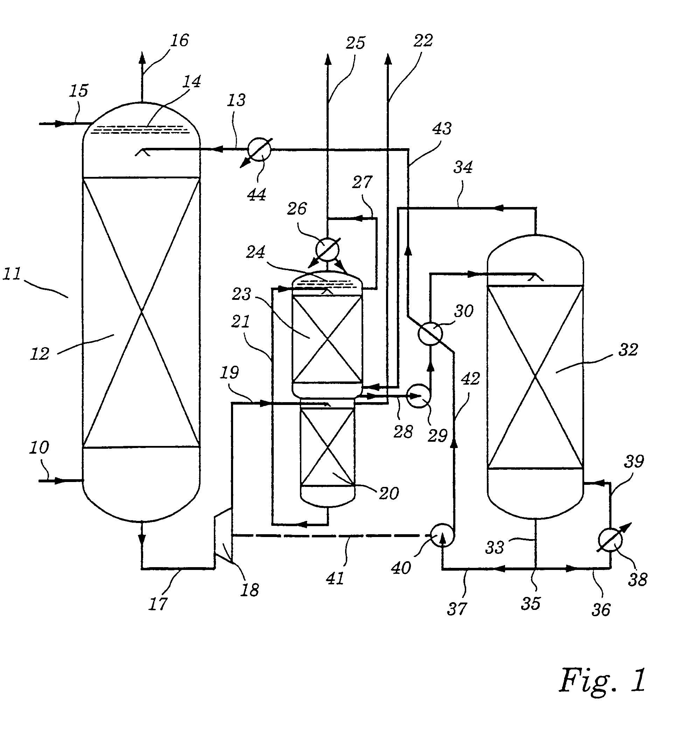

Bezugnehmend auf Figur 1 erkennt man eine bevorzugte Anordnung zur Durchführung der erfindungsgemäßen Verwendung, wie sie beispielsweise zum Entfernen von COS aus einem COS und weitere Sauergase enthaltenden Erdgasstrom verwendet wird.

Das Fluidgemisch, welches beispielsweise Erdgas als Wertprodukt enthalten kann, und darüber hinaus Sauergase wie H₂S, CO₂ und COS umfaßt, wird über eine Zuleitung 10 in eine Absorptionskolonne 11 geleitet. Vor dem Eintritt in die Absorptionskolonne können (nicht dargestellte) Trenneinrichtungen vorgesehen sein, welche beispielsweise Flüssigkeitströpfchen aus dem Rohgas entfernen. Die Absorptionskolonne 11 besitzt eine Absorptionszone 12, in welcher ein inniger Kontakt des sauren Rohgases mit einer an Sauergasen armen Waschflüssigkeit gewährleistet wird, die über eine Zuleitung 13 in den Kopfbereich der Absorptionskolonne 11 gelangt und im Gegenstrom zu dem zu behandelnden Gas geführt wird. Der Absorptionsbereich 12 kann beispielsweise durch Böden, etwa Sieb- oder Glockenböden, oder durch Packungen realisiert werden. Typischerweise werden 20 bis 34 Böden verwendet. Im Kopfbereich der Absorptionskolonne 11 können 1 bis 5 Rückwaschböden 14 angeordnet sein, um den Verlust an leicht flüchtigen Bestandteilen der Waschflüssigkeit zu verringern. Die beispielsweise als Glockenböden ausgebildeten Rückwaschböden 14 werden über eine Kondensatleitung 15 mit Wasser gespeist, durch welches das behandelte Gas geleitet wird.

Der von Sauergasbestandteilen weitgehend befreite Erdgasstrom verläßt die Absorptionskolonne 11 über einen Kopfabzug 16. In der Leitung 16 kann - insbesondere wenn in der Kolonne 11 keine Rückwaschböden vorgesehen sind, ein (nicht dargestellter) Abscheider angeordnet sein, welcher mitgerissene waschflüssigkeit aus dem Gasstrom entfernt.

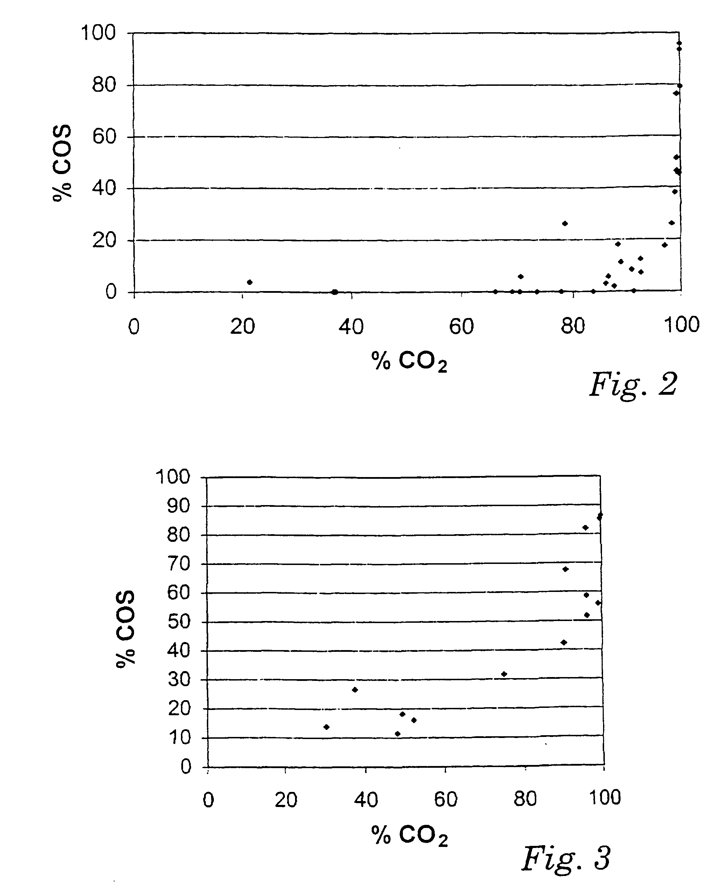

Anstelle der hier beschriebenen einstufigen Absorptionseinrichtung kann auch eine zweistufige Variante verwendet werden, wie sie beispielsweise in Figur 2 des US-Patentes 4,336,233 dargestellt ist.

Die sauergashaltige Waschflüssigkeit verläßt die Absorptionskolonne 11 über eine Leitung 17 und gelangt über eine optional vorhandene Entspannungsturbine 18 und eine Leitung 19 in den Kopfbereich einer ersten Entspannungskolonne 20. In der Entspannungskolonne 20 wird der Druck der Waschflüssigkeit plötzlich erniedrigt, so daß die leichteren Kohlenwasserstoffe aus der Waschflüssigkeit abdampfen können. Diese Kohlenwasserstoffe können verbrannt oder in Absorptionskolonne 11 zurückgeführt werden. Die Waschflüssigkeit verläßt die erste Entspannungskolonne 20 über eine Leitung 21 am Boden der Kolonne, während die abgedampften Kohlenwasserstoffe über eine Leitung 22 am Kopf der Entspannungskolonne 20 abgezogen werden.

Im dargestellten Beispiel gelangt die Waschflüssikeit anschließend in eine zweite Entspannungskolonne 23, die beispielsweise als Niederdruckkolonne (d.h. als sogenannter Low-Pressure-Flash) ausgebildet sein kann. Schwerer flüchtige Sauergase dampfen, nach Durchtritt durch gegebenenfalls vorgesehene Rückwaschböden 24, über die Leitung 25 ab. Am Kopf der zweiten Entspannungskolonne 23 kann ein Wärmetauscher mit Kopfverteiler oder Kondensator 26 vorgesehen sein, der mitgerissene Tröpfchen der Waschflüssigkeit in die Entspannungskolonne zurückführt. Der Kondensator 26 kann gegebenenfalls durch eine Bypassleitung 27 überbrückt werden. Die waschflüssigkeit verläßt die zweite Entspannungskolonne 23 über eine Leitung 28 und wird über eine Pumpe 29 durch einen Wärmetauscher 30 gepumpt, wo sie Wärme von der zur Absorptionskolonne 11 zurückgeführten, regenerierten Waschflüssigkeit aufnimmt. Anschließend gelangt die Waschflüssigkeit in den Kopfbereich einer Strippkolonne 32, in welchem die Waschflüssigkeit im Gegenstrom zu einem Gasstrom, beispielsweise Wasserdampf, geführt wird. In der Strippkolonne 32 werden restliche Sauergasbestandteile aus der waschflüssigkeit entfernt. Die Waschflüssigkeit verläßt den Sumpfbereich der Strippkolonne 32 über eine Leitung 33, während die abgestrippten Sauergasbestandteile über eine Leitung 34 in den Sumpfbereich der zweiten Entspannungskolonne 23 zurückgeführt werden. Die durch die Leitung 33 abströmende Waschflüssigkeit gelangt zu einem Verteiler 35, an welchem ein Teil der Waschflüssigkeit über eine Leitung 36 zu einem Aufkocher 38 transportiert wird, der die Flüssigkeit erhitzt und als Dampf über eine Leitung 39 in das Stripprohr zurückführt. Ein anderer Teil der Waschflüssigkeit gelangt vom Verteiler 35 über die Leitung 37 zu einer Pumpe 40, die, wie schematisch durch den Übertragungsweg 41 angedeutet ist, mit der Entspannungsturbine 18 verbunden ist. Die Entspannungsturbine liefert einen Teil der zum Antrieb der Pumpe 40 nötigen Energie. Über eine Leitung 42 gelangt die regenerierte, an Sauergasen arme Waschflüssigkeit in den Wärmetauscher 30, wo sie Wärme auf die durch die Leitung 28 in die Strippkolonne 32 geleitete Waschflüssigkeit überträgt. Die regenerierte Waschflüssigkeit wird dann über die Leitungen 43 und 13 in die Absorptionskolonne 11 zurückgeführt, wo sie erneut Sauergase aufnehmen kann. Vor Eintritt in die Absorptionskolonne kann ein weiterer Wärmetauscher 44 vorgesehen sein, welcher die Waschflüssigkeit auf die erforderliche Zulauftemperatur abkühlt. Ebenso können Filter und andere (nicht dargestellte) Reinigungseinrichtungen vorgesehen sein, um die Waschflüssigkeit vor ihrem Eintritt in die Absorptionskolonne 11 zu reinigen.

Im Bereich der Leitungen 43,13 können auch (nicht dargestellte) Zuleitungen für frische Waschflüssigkeit vorgesehen sein, falls die erforderliche Zulaufmenge nicht allein durch regenerierte waschflüssigkeit aufrechterhalten werden kann.

Die Menge an zulaufender waschflüssigkeit kann durch die Leistung der Pumpen und durch (nicht dargestellte) Ventil- und Drosseleinrichtungen reguliert werden.

Im folgenden wird die Erfindung anhand von Versuchsbeispielen unter Bezugnahme auf die in den Figuren 2 bis 5 dargestellten Diagramme näher erläutert.

### Beispiele:

Die Absorptionskolonne einer Versuchsanlage wurde mit einer Erdgaszusammensetzung gespeist, die folgende Verunreinigungen enthielt: 3 bzw. 8 Vol.% CO₂, 10 Vol.% H₂S, zwischen 25 und 150 ppm_{V} COS, zwischen 120 und 160 ppm_{V} Methylmercaptan. Der Betriebsdruck des Absorbers wurde in einzelnen Versuchen variiert und betrug 40, 54 oder 60 bar. Die Gas- und Flüssigkeitsdurchsätze wurden abhängig von der jeweiligen Absorberkonfiguration, dem verwendeten Lösungsmittel und den vorgegebenen Betriebsparametern rechnerisch ermittelt, um eine bestimmte CO₂-Absorptionsrate zu erzielen.

Der Gesamtamingehalt der waschflüssigkeit betrug jeweils 40 Gew.% bezogen auf die Gesamtlösung.

In den Diagrammen der Fig. 2 bis 5 ist dargestellt, wieviel Prozent des in dem Gasstrom enthaltenen COS bei einer bestimmten CO₂ -Absorptionsrate entfernt werden.

Das Diagramm der Fig. 2 zeigt dabei das Ergebnis einer Vergleichsversuchsreihe für eine reine MDEA-Lösung mit einer Konzentration von ca. 3,46 mol/l (ca. 40 Gew.%) MDEA.

Man erkennt, daß bis zu sehr hohen CO₂-Absorptionsraten (über 95% CO₂-Entfernung) praktisch kein COS aus dem Gasstrom entfernt werden kann (Absorptionsrate < 20%). Erst bei nahezu vollständiger CO₂-Beseitigung werden nennenswerte Anteile an COS aus dem Gasstrom entfernt. Eine praktisch 100%ige Beseitigung des CO₂ aus dem Gasstrom ist jedoch in wirtschaftlich vertretbarer Weise nicht möglich, so daß Fig. 2 eindrucksvoll belegt, daß eine reine MDEAwaschflüssigkeit zur COS-Entfernung nicht geeignet ist.

In Fig. 3 ist das Ergebnis einer Vergleichsversuchsreihe dargestellt, bei der eine Waschlösung verwendet wurde, die 3,39 mol/l (39,2 Gew.%) MDEA und 0,10 mol/l (0,8 Gew.%) Piperazin enthielt. Man erkennt eine etwas verbesserte Absorptionsfähigkeit für COS. Allerdings bleibt das Problem bestehen, daß ein größerer Anteil an COS praktisch nur bei 100%iger Entfernung von CO₂ aus dem Fluidstrom erreicht werden kann.

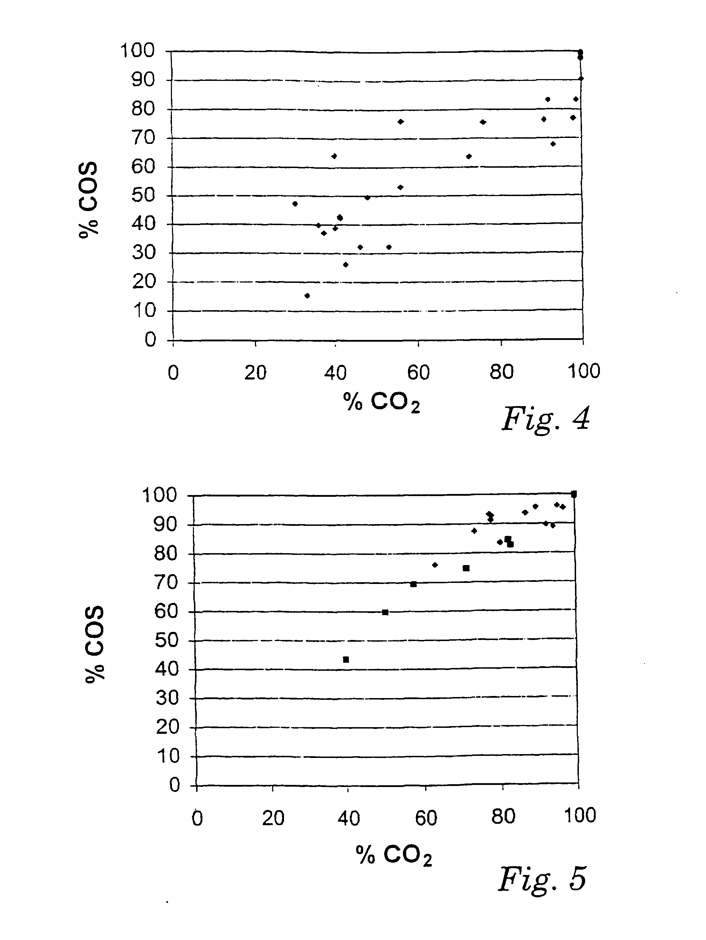

In Fig. 4 ist das Ergebnis einer Vergleichsversuchsreihe dargestellt, bei der eine Waschlösung mit 3,20 mol/l (37 Gew.%) MDEA und 0,36 mol/l (3 Gew.%) Piperazin verwendet wurde, d.h. eine Lösung mit einer Aktivatorkonzentration, die etwas unterhalb des erfindungsgemäß vorgeschlagenen Bereichs liegt. Man erkennt bereits eine weitgehend unselektive Entfernung von CO₂ und COS bis zu Absorptionsraten von ca. 80%, d.h. wenn ca. 30 bis 80% des in dem Gasstrom enthaltenen CO₂ entfernt werden, so werden bei diesen Betriebsparametern auch 30 bis 80% des im Gasstrom enthaltenen COS entfernt. Das Diagramm zeigt jedoch auch, daß wiederum praktisch 100% des CO₂ entfernt werden muß, um mehr als 90% COS aus dem Erdgasstrom entfernen zu können. Eine weitgehend vollständige Entfernung von COS aus dem Gasstrom ist unter diesen Bedingungen nur mit einer sehr unwirtschaftlichen Überschußfahrweise des Prozesses möglich.

Zur weitgehend vollständigen Entfernung von COS, d.h. zu Entfernung von mehr als 95% COS aus dem Gasstrom, wird daher erfindungsgemäß vorgeschlagen eine Waschlösung mit einem Aktivatorgehalt von mehr als 0,8 mol/l zu verwenden. Die in Fig. 5 dargestellte Ergebnisse einer entsprechenden Versuchsreihe bestätigen eindrucksvoll die Vorteile der erfindungsgemäßen Verwendung. Dabei wurde eine wässrige Waschflüssigkeit verwendet wurde, die 2,77 mol/l (32 Gew.%) MDEA und 0,96 mol/l (8 Gew.%) Piperazin enthielt. Man erkennt hier, daß COS selektiv besser als CO₂ aus dem Gasstrom entfernt wird.

Erfordert beispielsweise die Einhaltung internationaler Schwefelspezifikationen eine Entfernung von mehr als 95% COS aus einem Erdgasstrom, so kann dies, wie man dem Diagramm der Fig. 5 entnimmt, bereits bei einer CO₂ -Absorptionsrate von unter 95% erreicht werden. Es ist mit dem erfindungsgemäßen Verfahren also möglich, COS bis zum Erreichen der erforderlichen Schwefelspezifikationen zu entfernen, ohne daß CO₂ vollständig aus dem Gasstrom entfernt werden muß.

Erfindungsgemäß koppelt die COS-Absorptionsrate an die Absorptionsrate von CO₂. Es kann daher für CO₂- und H₂S-Entfernung mittels Aminwäschen kommerziell erhältliche Software zur Bestimmung der für die weitgehende COS-Entfernung erforderlichen Betriebsparameter verwendet werden. Werden beispielsweise die Betriebsparameter berechnet, die eine 95%ige Beseitigung von CO₂ ermöglichen, so wird mit dem erfindungsgemäßen Verfahrens unter diesen Bedingungen auch mindestens 95% des im Gasstrom enthaltenen COS entfernt.

Im Diagramm der Fig. 5 erkennt man außerdem, daß die Variation des CO₂-Gehalts des Gasstroms keinen Einfluß auf das Absorptionsverhältnis von COS und CO₂ hat: Die als Quadrate dargestellten Meßpunkte wurden bei einem CO₂ Gehalt von 8 Gew.% ermittelt, während die als Rauten dargestellten Meßpunkte einem CO₂ Gehalt von 3 Gew.% entsprechen. Beide Meßreihen liegen auf derselben Kurve.

## Patentansprüche

1. Verwendung einer Waschflüssigkeit, die aus einer wässrigen Aminlösung besteht, die 1,5 bis 5 mol/l eines aliphatischen tertiären Alkanolamins und 0,8 bis 1,7 mol/l wenigstens eines Aktivators enthält, der ausgewählt ist unter Piperazin, Methylpiperazin und Morpholin, zur selektiven Entfernung von COS gegenüber CO₂ aus Fluidströmen, die CO₂, COS und gegebenenfalls weitere saure Gase enthalten.

2. Verwendung gemäß Anspruch 1, **dadurch gekennzeichnet, daß** die Waschflüssigkeit zwischen 0,8 und 1,2 mol/l des Aktivators enthält.

3. Verwendung gemäß einem der Ansprüche 1 oder 2, **dadurch gekennzeichnet, daß** der Gesamtamingehalt der Waschflüssigkeit 20 bis 70 Gew.-%, bevorzugt 40 bis 50 Gew.-% beträgt.

4. Verwendung gemäß einem der Ansprüche 1 bis 3, **dadurch gekennzeichnet, daß** man als Alkanolamin Methyldiethanolamin oder Triethanolamin verwendet.

## Claims

1. The use of a scrubbing liquor consisting of an aqueous amine solution comprising from 1.5 to 5 mol/l of an aliphatic tertiary alkanolamine and from 0.8 to 1.7 mol/l of at least one activator selected from piperazine, methylpiperazine and morpholine, for selective removal of COS with respect to CO₂ from fluid streams comprising CO₂, COS and, if appropriate, further acidic gases.

2. The use as claimed in claim 1, **characterized in that** the scrubbing liquor comprises from 0.8 to 1.2 mol/l of the activator.

3. The use as claimed in either of claims 1 and 2, **characterized in that** the total amine content of the scrubbing liquor is from 20 to 70% by weight, preferably from 40 to 50% by weight.

4. The use as claimed in any of claims 1 to 3, **characterized in that** the alkanolamine used is methyldiethanolamine or triethanolamine.

## Revendications

1. Utilisation d'un liquide de lavage, qui est constitué d'une solution aqueuse d'amine qui contient 1,5 à 5 moles/litre d'une alcanolamine tertiaire aliphatique et 0,8 à 1,7 mole/litre d'au moins un activateur qui est choisi parmi de la pipérazine, de la méthylpipérazine et de la morpholine, pour l'élimination sélective de COS par rapport à CO₂ dans des courants fluides qui contiennent CO₂, COS et éventuellement d'autres gaz acides.

2. Utilisation suivant la revendication 1, **caractérisée en ce que** le liquide de lavage contient entre 0,8 et 1,2 mole/litre de l'activateur.

3. Utilisation suivant l'une des revendications 1 et 2, **caractérisée en ce que** la teneur totale en amine du liquide de lavage est de 20 à 70% en poids, de préférence de 40 à 50% en poids.

4. Utilisation suivant l'une des revendications 1 à 3, **caractérisée en ce que**, comme alcanolamine, on utilise de la méthyldiéthanolamine ou de la triéthanolamine.
